**Europäisches Patentamt**

**European Patent Office**

**Office européen des brevets**

(19)

(11) Veröffentlichungsnummer : **0 468 073 B1**

(12)

# EUROPÄISCHE PATENTSCHRIFT

(45) Veröffentlichungstag der Patentschrift :
**06.10.93 Patentblatt 93/40**

(51) Int. Cl.$^5$ : **C10B 53/00**

(21) Anmeldenummer : **90114299.2**

(22) Anmeldetag : **26.07.90**

(54) **Verfahren zur vollständigen Verwertung von Hochpolymerabprodukten.**

(43) Veröffentlichungstag der Anmeldung :
**29.01.92 Patentblatt 92/05**

(45) Bekanntmachung des Hinweises auf die
Patenterteilung :
**06.10.93 Patentblatt 93/40**

(84) Benannte Vertragsstaaten :
**AT BE CH DE DK ES FR GB GR IT LI NL SE**

(56) Entgegenhaltungen :
**WO-A-82/00509**
**GB-A- 1 058 116**
**US-A- 4 118 282**
**US-A- 4 823 711**

(73) Patentinhaber : **Maschinen- und Anlagenbau**
**Grimma GmbH (MAG)**
**Postfach 25 42 55**
**D-04662 Grimma (DE)**

(72) Erfinder : **Dummersdorf, Hans-Ulrich, Dr.**
**Strasse der DSF 18**
**DDR-7240 Grimma (DD)**
Erfinder : **Jahn, Wolfgang, Dr.**
**Goethestrasse 42**
**DDR-7240 Grimma (DD)**
Erfinder : **Noack, Werner, Dr.**
**Strasse der DSF 49**
**DDR-7240 Grimma (DD)**
Erfinder : **Heidel, Wolfgang, Dipl.-Ing.**
**August-Bebel-Strasse 24**
**DDR-7245 Naunhof (DD)**

(74) Vertreter : **Patentanwälte Grünecker,**
**Kinkeldey, Stockmair & Partner**
**Maximilianstrasse 58**
**D-80538 München (DE)**

## Beschreibung

Die Erfindung ist anwendbar zur vollständigen stofflichen Verwertung und Hochveredlung aller von der chemischen Industrie bereitgestellten Hochpolymeren, wie Kunststoffe, Kunststoffasern etc., die einen ein- oder mehrmaligen Nutzungsprozeß durchlaufen haben und in Form von Abfällen, Sekundärrohstoffen aus PVC, Polyethylen, Polystyrol, Polyamiden, Polyestern, Polyacrylaten u. a. mit oder ohne Verschmutzung bzw. mit oder ohne Strukturschädigung durch Alterung oder Einwirkung von Licht bzw. anderen Umwelteinflüssen unsortiert vorliegen.

In den letzten Jahren wurde zunehmend nach Recycling-Möglichkeiten für Hochpolymerabprodukte gesucht. Dazu zählen insbesondere Abfallprodukte, wie Flaschen, Behälter, Eimer, Rohrleitungen, Folien, Isolierungen, Schaumstoffe, Verpackungsmaterial, Tafeln, Baustoffe, Chemiefasern usw. aus PVC, Polyethylen, Polystyrol, Polyamiden, Polyestern und Polyacrylaten u. a., aber auch Zwischen- und Monomerprodukte, die zu deren Herstellung erforderlich sind.

So wird heute bereits ein Teil dieser hochpolymeren Produkte gesammelt und erfaßt und werden mehr oder weniger prinzipiell unvollkommene Recycling-Möglichkeiten angewandt, die aber bereits eine gewisse Rohstoff- und Energieeinsparung realisieren.

Der Hauptweg zur Wiederverwendung, insbesondere thermoplastischer Kunststoffabfälle, besteht in einer erneuten Aufschmelzung und Homogenisierung sowie Umformung der Hochpolymerabprodukte.

So wird in der DD - PS 222 544 ein Verfahren zur Herstellung von Formteilen aus thermoplastischer Polyester-Formmasse mittels Spritzgießen beschrieben. Die DD - PS 144 885 beschreibt ein ähnliches Verfahren zur Herstellung von Formteilen aus Polyurethanabfällen, in der DD - PS 262 237 wird ein Verfahren zur Vorbereitung der PU-Elastformabfälle für diesen Prozeß vorgestellt.

In der DD - PS 137 938 wird ein Verfahren zur Herstellung von Formteilen aus einer plastischen Mischmasse aus Sekundärpolyethylen und Gummi beschrieben.

Mit der Herstellung eines spritzgießfähigen Kautschukgemisches aus Altgummi befaßt sich die DD - PS 247 690.

Die DE - PS 3603 009 beschreibt ein komplettes Verfahren zur Herstellung von Formteilen einschließlich der Prozeßstufen Erfassung, Vorsortierung, Reinigung und Plastifizierung.

Weitere Verfahren zu dieser Problematik beinhalten die DE - PS 3544 417, DE - PS 3901 139, DE - PS 3441 906, DE - PS 3242 120, EP 0248 239, WO 85/00 480.

Die genannten Verfahren ermöglichen ein nutzbringendes Recycling, welches aber starken Beschränkungen unterliegt und demzufolge nachteilbehaftet ist:

1. Bei einer mehrmaligen Verwendung der umgeformten Polymermaterialien tritt infolge Alterung ein erheblicher Stabilitäts- und Qualitätsverlust ein, der die Einsatzgebiete stark einschränkt. Hinzu kommt die Verarbeitung einer großen Zahl unterschiedlicher Farben, die die optische Attraktivität stark herabsetzt.

Ein mehrmaliger Durchlauf des Polymermaterials durch das Recycling ist nicht möglich, so daß die Kohlenwasserstoffsubstanz dieser Produkte letztlich auch auf die Deponie gelangt. Eine grundsätzliche Lösung des Rohstoffproblemes durch diese Prozeßgruppe wird also nicht erreicht.

2. In den angegebenen Verfahren können nur thermoplastische Hochpolymerabprodukte verarbeitet werden.

3. Die zu verarbeitenden Hochpolymerabprodukte müssen sortenrein sein, meist auch gereinigt werden, was zusätzliche Verfahren erfordert (DD 235 376, DD 256 048, DD 233 794, DD 207 629, DE 3634 808, DE 3535 633, DE 3601 175, DE 2900 666, DE 2639 864).

Eine zweite Verfahrensgruppe ermöglicht demgegenüber eine bessere Wiederverwendung der Kunststoffabfallprodukte, wobei durch gezielten Aufschluß wiederverwendungsfähige Produkte mit geringerem Grad der Qualitätsverminderung entstehen, indem nicht nur eine physikalische, sondern auch eine chemische Umwandlung vorgenommen wird. Dazu zählt ein Verfahren nach der DD - PS 216 474, wo durch Devulkanisation von Altgummi bei Spaltung der Schwefelbrücken unter Schonung der Polymerstruktur durch reduktive Replastizierung unter Einwirkung von Aldehyden ein wiederum vulkanisierfähiger Gummi geschaffen wird.

In der DD - PS 134 773 wird ein Verfahren beschrieben, in welchem Rückstände der Äthylensuspensionspolymerisation bei 130 °C bis 250 °C in Gegenwart von $O_2$ oder sauerstoffhaltigen Gasen einem thermooxidativen Abbau unterzogen werden, wobei durch Zusatz viskositätsabsenkender Stoffe ein anoxidiertes Polyethylenwachs als Produkt entsteht.

In der DD - PS 134 773 wird ein Verfahren beschrieben, in welchem Rückstände der Ethylensuspensionspolymerisation bei 130 °C bis 250 °C in Gegenwart von $O_2$ oder sauerstoffhaltigen Gasen einem thermooxidativen Abbau unterzogen werden, wobei durch Zusatz viskositätsabsenkender Stoffe ein anoxidiertes Polyethylenwachs als Produkt entsteht.

Ein Verfahren zur Verwertung isocyanathaltiger Destillationsrückstände durch Umwandlung zu Isocyanaten enthält die DD - PS 238 988. Dabei werden die Rückstände bei Temperaturen unterhalb 300 °C mit Epoxidverbindungen umgesetzt und mit Di- oder Polyisocyanaten vermischt.

Die Verwertung von speziellen Kunststoffabfällen ist weiterhin aus folgenden Patentschriften bekannt:

- DD 146 826 Herstellung flexibler Schmelzklebestoffe auf Polyesterbasis durch Alkoholyse unter kontinuierlicher Zugabe von Diolen und Polyalkylenoxiden bei Drücken bis 2,0 MPa und anschließender Polykondensation.
- DD 141 525 Rückgewinnung wasserstoffaktiver Verbindungen aus Polyurethanabfällen
- DD 130 256 Verfahren zur Herstellung von Schmelzklebstoffen aus Polyesterabfällen
- DD 125 979 Verfahren zur Nutzung vernetzter Polyester- oder Epoxidharzabfälle
- DE 3037 829 Umwandlung von Abfällen aus Polyolefinen in schonender Weise in höherwertige modifizierte Peche und niedrigsiedende Aromaten und Olefine bei mittleren Drücken und Temperaturen über 300 °C
- DE 2951 617 Polyurethanrecycling durch Alkoholyse oder Acidolyse
- DE 2811 203 Verfahren zur Rückgewinnung von Polystyrol durch selektives Lösen in flüssigem $SO_2$ in einem ersten Schritt und Verdampfen des $SO_2$ in einem zweiten Schritt
- EP 0052 213 Verfahren zur katalytischen Depolymerisation von Polytetramethylenglykolether in Gegenwart von Bleicherde als Katalysator bei Temperaturen von 90 °C bis 180 °C mit der Zielstellung der Herstellung von Tetrahydrofuran
- EP 0048 340 Rückgewinnung von Caprolactam aus Nylonoligomeren
- EP 0031 538 Aufarbeitung von Polyurethan durch Alkoholyse und Acidolyse
- EP 0000 948 Herstellung polyolhaltiger Flüssigkeiten aus Polyurethanabfällen in Gegenwart stark basischer Verbindungen bei Temperaturen von 150 °C bis 220 °C

Alle Verfahren dieser Gruppe weisen folgende Nachteile auf:

1. Das Einsatzfeld ist hochspezifisch auf einen bestimmten Polymertyp mit meist geringem Anteil am gesellschaftlichen Gesamtaufkommen gerichtet.

2. Das Problem der sortenreinen Bereitstellung der Polymere bleibt bestehen, insofern es sich beim Ausgangsprodukt nicht um einen Rückstand handelt, der direkt in der Polymerproduktion anfällt.

3. Das Polymerabprodukt wird in ein qualitativ mehr oder weniger hochwertiges anderes nutzbares Produkt überführt; ein echtes Recycling zur Wiederherstellung eines neuwertigen Originalpolymers tritt nicht auf.

Ein weiteres bekanntes Recyclingverfahren ist die Hydrierung von kohlenstoffhaltigen Abfällen bei Temperaturen 75 °C bis 600 °C und hohen Drücken bis 600 bar (Rheinbraun-Verfahren DD - PS 249 036). Dieses Verfahren hat neben den Nachteilen eines zusätzlichen Wasserstoffverbrauches und den anzuwendenden hohen Drücken, die hohe technische Aufwendungen erfordern, den Nachteil, daß undefinierte Kohlenwasserstoffgemische entstehen, die ohne Weiterverarbeitung nicht verwendbar sind. Ein Recycling direkt in die Polymersynthese ist nicht möglich.

Bekannt sind darüber hinaus Pyrolyseverfahren, die im Temperaturbereich von 150 °C bis 500 °C (DE 3323 161) bzw. 400 °C bis 650 °C (DE 3531 514) arbeiten. Das erste Verfahren kann nur thermoplastische Kunststoffe verarbeiten und es entstehen minderwertige Produkte, deren Weiterverwendung schwierig ist. Im zweiten Verfahren werden die minderwertigen Pyrolyseabgase einer thermischen Nachverbrennung ohne weitere Nutzung zugeleitet, das Verfahren dient also nur der Vernichtung von Sekundärpolymeren und Lackschlämmen.

Ein Verfahren, welches ebenfalls nur der Beseitigung von Kunststoffabfällen dient, wird in der DE - PS 2409 966 beschrieben. Nach dem dort geschützten Verfahren wird die Fotozersetzung von Kunststoffabfällen durch Sonnenlicht mittels Aufbringen von Zersetzungsbeschleunigern, wie Mangan-, Eisen-, Cobalt-, Nickel- oder Kupfersalzen einer höheren Fettsäure, wesentlich beschleunigt.

Darüber hinaus sind Verfahren zur Plasmapyrolyse und Plasmavergasung fossiler Rohstoffe, wie Kohle, Kohleinhaltsstoffe, Erdöl und Erdgas, bekannt. Bekannt ist auch die Pyrolyse von Altreifen, die zu minderwertigen und nicht einsatzfähigen Rußen, Ölen und Pyrolysegasen führt.

Der Erfindung liegt die Aufgabe zugrunde, ein Verfahren zu schaffen, mit welchem es möglich wird, sämtliche anfallenden sekundären Hochpolymere, vorzugsweise solche, die von Hause aus keine mit standardisierten Meßmethoden beschreibbaren Flüchtigen enthalten, unabhängig von ihrer chemischen Zusammensetzung und physikalischen Konsistenz in einer solchen Form zu verarbeiten, daß die in ihnen enthaltene Rohstoffsubstanz C, H, Cl vollständig wieder verwendet werden kann, so daß unter Nutzung der bestehenden Folgechemie ein Aufbau völlig neuer, wiederum unbeschränkt einsatzfähiger Hochpolymere aus der Altsubstanz, quasi ein nahezu 100 %iges echtes Recycling, erreicht wird.

Erfindungsgemäß wird die Aufgabe dadurch gelöst, daß die Hochpolymerabprodukte auf plasmachemischem Wege in ihre chemischen Grundstoffe, aus denen sie ursprünglich synthetisiert wurden, überführt werden, wie Azetylen, Ethylen, Wasserstoff, HCN, CO, HCl und Ruß. Zweckmäßigerweise werden die Hochpolymerabprodukte einer Plasmapyrolyse unter reduzierenden Bedingungen oder einer Plasmavergasung bei gleichzeitigem Vorliegen reduzierender und oxidierender Plasmabedingungen unterzogen.

Vorzugsweise werden dazu die Hochpolymerabprodukte granuliert oder anders zerkleinert, in eine förderfähige Konsistenz überführt, mit überhitztem Dampf vermischt und einem Wasserstoffplasmastrahl mit einer mittleren Massentemperatur von mindestens 1000 °C und einem Druck von 0,05 bis 0,5 MPa zugeführt, so daß eine Vermischung von Polymersuspension oder -granulat mit dem Wasserstoffplasma eintritt. Das sich bildende reaktive Plasma tritt anschließend in einen Plasmareaktor ein. Nach einer Verweilzeit im Plasma von $10^{-3}$ s bis 30 s entsprechend der chemischen Zusammensetzung und dem physikalischen Zustand, z. B. der Teilchengröße, wird der Plasmastrahl auf Temperaturen unter 1000 °C gequencht und damit in einen Pyrolysegasstrom umgewandelt. Aus diesen werden die vorhandenen Feststoffe, wie verkokte Polymerabprodukte oder Ruß, entfernt und das Plasmapyrolysegas wird vollständig oder teilweise in seine Konstituenten aufgetrennt.

Zum Überführen in eine förderfähige Konsistenz werden die zerkleinerten oder granulierten Polymerabprodukte zweckmäßigerweise thermisch aufgeschmolzen, vorzugsweise mittels eines Extruders, in einem Lösungsmittel bzw. Lösungsmittelgemisch gelöst, in Wasser aufgeschwemmt oder es wird Heißdampf, Wasserstoff, Methan, Kohlendioxid, Heizgas o. ä. als Schleppgas zugeführt. Die vollständige oder teilweise Auftrennung des im Plasmaprozeß entstehenden Plasmapyrolysegases in seine Konstituenten erfolgt vorzugsweise durch Absorption und Tieftemperaturdestillation. Die entstehenden Konstituenten können dann ganz oder teilweise wiederum entsprechenden Polymersyntheseprozessen zugeführt werden.

Die Wirkungsweise des erfindungsgemäßen Verfahrens beruht darauf, daß langkettige Moleküle, wie sie alle Hochpolymere, auch textiler Natur, darstellen, eine relativ niedrige Bindungsenergie zwischen den Kohlenstoffatomen haben, die eine leichtere Spaltung in Kohlenwasserstoffbruchstücke ermöglicht, als dies z. B. bei fossilen Kohlenstoffträgern, wie z. B. Kohle, der Fall ist.

Unter den Bedingungen eines reaktiven Wasserstoffplasmas werden sämtliche Hochpolymere in Fragmente aufgespalten, die sich in die thermodynamisch begünstigten Verbindungen, wie Azetylen, Ethylen, Wasserstoff, CO, HCl, HCN, also hochenergetische Verbindungen, aufspalten, die auch die chemischen Ausgangsstoffe für die heutige Produktion sämtlicher bekannter Polymere darstellen. So wird Polyethylen durch Einwirkung eines Wasserstoffplasmastrahles nach folgender Brutto-Reaktionsgleichung umgesetzt:

$$(CH_2)_n \xrightarrow{H_2-Plasma} a\ C_2H_2 + b\ C_2H_4 + c\ H_2 + d\ C$$

Die Koeffizienten a, b, c, d hängen von der Plasmatemperatur, d. h., dem Dissoziationsgrad und der Plasmaenthalpie, ab. Polyvinylchlorid reagiert im Wasserstoffplasma nach folgender Brutto-Reaktionsgleichung:

$$(CH_2CHCl)_n \xrightarrow{H_2-Plasma} a\ C_2H_2 + b\ C_2H_4 + c\ H_2 + d\ C + e\ HCl$$

Für die Größe der Koeffizienten a, b, c, d, e gilt das gleiche, wie bei der Umsetzung von Polyethylen.

Die Zumischung von überhitztem Dampf zum Polymergranulat bzw. zur -suspension vor der Einmischung in den Plasmastrahl vermindert die Rußbildung zugunsten der Bildung von Wasserstoff und einer zusätzlichen CO-Bildung, d. h., der überhitzte Dampf nimmt gezielt an der Reaktion teil.

Bei Einsatz von Polyacrylaten ergibt sich im Plasmastrahl eine Umwandlung in die Produkte Azetylen $C_2H_2$, Ethylen $C_2H_4$, Wasserstoff $H_2$, Ruß C und HCN.

Polystyrol liefert bei der Reaktion in einem Wasserstoffplasmastrahl Azetylen $C_2H_2$, Ethylen $C_2H_4$, Wasserstoff $H_2$, Ruß C und je nach Heißdampfeinsatz CO zuungunsten der Rußbildung. Wesentlich für das erfindungsgemäße Verfahren ist auch, daß die eingesetzten Hochpolymerabprodukte im allgemeinen keine nach bekannten Prüfverfahren feststellbaren flüchtigen Produkte beinhalten, also nicht standardisiert, wie z. B. Kohle, daraufhin vermessen werden können.

Die erforderliche Reaktionszeit, d. h., Verweilzeit der Hochpolymere im Plasmastrahl, hängt von der Art der Einbringung der Hochpolymerabprodukte in den Plasmastrahl, d. h., Granulat, Suspension oder Schmelze, der Partikelgröße der Hochpolymerabprodukte und ihrer chemischen Struktur ab und liegt zwischen $10^{-3}$ s und 60 s.

Letztlich kann aus der Plasmapyrolyse von Hochpolymerabprodukten nach dem erfindungsgemäßen Verfahren jeder der chemischen Grundstoffe für die heutige Polymersynthese, d. h., Azetylen $C_2H_2$, Ethylen $C_2H_4$, Wasserstoff $H_2$, Kohlenmonoxid CO, Blausäure HCN, als auch Methanol (über $H_2$/CO-Gemische), Azetalde-

hyd, Essigsäure (über Azetylen) gewonnen werden und damit wird die Grundlage für eine Neusynthese aller bekannten Polymermaterialien mit der bekannten Folgechemie der o. g. Grundstoffe geschaffen.

### Beispiel 1

Ein Gemisch von mehr als 50 Ma-% thermoplastischer Hochpolymerabprodukte (z. B. Polyethylen) wird in einer Schneidmühle granuliert, anschließend in einem Extruder bei 115 °C aufgeschmolzen (thermoplastischer Anteil) und durch diesen anschließend in ein Zumischteil eines Plasmapyrolysereaktors, der einen Wasserstoffplasmastrahl mit einer mittleren Massentemperatur von 2500 °C umhüllt, gepreßt, wo durch den Plasmastrahl die Oberfläche des durch das Zumischteil quellenden Polymersuspensionstromes abgetragen und im Plasma in einer Reaktionszeit von 10 s chemisch zerlegt und zu Azetylen, Ethylen und Wasserstoff umgesetzt wird. Durch einen Kreislaufgasquench wird das reaktive Plasma am Plasmareaktorausgang "abgelöscht" und werden die Produkte $C_2H_2$, $C_2H_4$, $H_2$ stabilisiert.

Nach der Feststoffabscheidung und einer Azetylenlösungsmittelwäsche wird das Restpyrolysegasgemisch einer Gastrennanlage zugeführt, um die Pyrolysegas-Komponenten in reiner Form zu erhalten, und diese werden wieder einer Polymersynthese zugeführt.

### Beispiel 2

Polyethylenabprodukte werden in einer Schneidmühle granuliert und anschließend in einem Extruder bei 180 °C aufgeschmolzen und homogenisiert. Die Schmelze wird in dünnflüssigen Zustand durch überhitzten Dampf mit einer Temperatur von 250 °C und einem Druck von o,5 MPa zerstäubt und einem Wasserstoffplasmastrahl einer mittleren Massentemperatur von 3000 °C zugeführt. Die nach einer Reaktionszeit von 0,5 s in dem als Wirbelreaktor ausgebildeten Plasmareaktor gebildeten Produkte Azetylen, Ethylen, CO, $H_2$ und C werden am Reaktorausgang mit kaltem Kreislaufpyrolysegas stabilisiert und nach der Rußabscheidung einer Gastrennanlage zugeführt.

### Beispiel 3

Polyvinylchloridabfälle werden in einer Schneidmühle granuliert, anschließend in einem Ansatzrührbehälter bei einer Temperatur von 80 °C mit einem Lösungsmittelgemisch aus Trichlorethylen und Tetrachlormethan gemischt, das PVC-Abprodukt dabei teilweise auf- und angelöst und die entstehende Suspension mittels Pumpendruck unter Zugabe von überhitztem Dampf in das Zumischteil eines Plasmapyrolysereaktors eingebracht, in welchem sich ein Wasserstoffplasmastrahl mit einer mittleren Massentemperatur von 2000 °C ausbreitet. Lösungsmittel und Polymerabfälle werden gemeinsam plasmachemisch in einer Reaktionszeit von 1 s zu Azetylen, Ethylen, Wasserstoff, HCl und Ruß umgesetzt, am Reaktoraustritt mit kaltem Pyrolysekreislaufgas gequencht und anschließend der mechanischen Rußabscheidung, einer Wasserwäsche zur HCl-Abscheidung und der Gastrennung zugeführt.

Eine weitere Ausführungsvariante ergibt sich, wenn die Polymer-/Lösungsmittel-Suspension mittels Pumpendruck zum Zumischteil des Plasmareaktors gefördert wird und dort mittels Heißdampf von 250 °C in den Wasserstoffplasmastrahl eingedüst wird.

### Beispiel 4

Ein undefiniertes Gemisch verschiedener nichtthermoplastischer Polymerabfälle wird in Schneid- oder Schlagmühlen granuliert, anschließend mit überhitztem Wasserdampf von 250 °C bis 300 °C als Schleppgas in einem Plasmareaktor gewirbelt, der einen $H_2$-Plasmastrahl mit einer mittleren Massentemperatur von 2500 °C umhüllt. In dem als Wirbelschichtreaktor ausgebildeten Plasmareaktor wird die granulierte Polymersubstanz bei einer mittleren Verweilzeit von 1 min vollständig in hochwertige Polymervorprodukte, wie Azetylen, Ethylen, Wasserstoff, CO und HCl, umgewandelt. Das Pyrolysegas, welches eine Verweilzeit von $10^{-3}$ s im Reaktor hat, wird am Reaktoraustritt im Wasser gequencht und einer Rußabscheidung mit anschließender HCl-Wäsche zugeführt. Die Auftrennung in die Polymervorproduktkomponente erfolgt in einer nachfolgenden Gastrennanalyse.

Das den Plasmareaktor verlassende gequenchte Pyrolysegas weist folgende Zusammensetzung auf:

$C_2H_2$ = 5 bis 10 Vol-%
$C_2H_4$ = 2 bis 3 Vol-%
$H_2$ = 50 bis 70 Vol-%
CO = 5 bis 10 Vol-%

EP 0 468 073 B1

HCl     =10 Vol-%

Weitere Vorteile des erfindungsgemäßen Verfahrens außer dem vollständigen Recycling sind:

1. Schonung der Primärenergieträgerressourcen,
2. Wegfall der Aufwendungen für die Gewinnung und die Aufbereitung fossiler Rohstoffe,
3. Reduzierung des Energieaufwandes zur Herstellung von Polymeren auf 60 bis 70 % gegenüber der Route über fossile Rohstoffe, da die Hochpolymere leichter und vollständiger gespalten werden,
4. Wegfall von aufwendigen und umweltbelastenden Prozeßstufen (z. B. PVC-Herstellung: Wegfall der Chlorelektrolyse und Karbidöfen zur $C_2H_2$-Synthese),
5. Ständige Erneuerung des Polymerbestandes in der Wirtschaft, praktisch ohne Einsatz von Rohstoffen,
6. Die Zusammensetzung des Polymerproduktgemisches beeinflußt nur die Pyrolysegaszusammensetzung, ohne den Prozeß zu beeinträchtigen,
7. An den Hochpolymerabprodukten anhaftende Rückstände, wie z. B. Haushaltchemikalien, werden ebenfalls in nutzbare Produkte, wie $C_2H_2$, $C_2H_4$, CO usw., umgesetzt.

## Patentansprüche

1. Verfahren zur vollständigen Verwertung von Hochpolymerabprodukten oder -abproduktgemischen beliebiger chemischer Zusammensetzung, dadurch gekennzeichnet, daß die Polymerabprodukte auf plasmachemischem Wege in die chemischen Grundstoffe überführt werden, aus welchen sie ursprünglich synthetisiert wurden.

2. Verfahren nach Anspruch 1, dadurch gekennzeichnet, daß die Polymerabprodukte einer Plasmapyrolyse unter reduzierenden Bedingungen unterzogen werden.

3. Verfahren nach Anspruch 1, dadurch gekennzeichnet, daß die Polymerabprodukte einer Plasmavergasung bei gleichzeitigem Vorliegen reduzierender und oxidierender Plasmabedingungen unterzogen werden.

4. Verfahren nach Anspruch 1, dadurch gekennzeichnet,
   - daß die Polymerabprodukte in einem ersten Verfahrensschritt zerkleinert oder granuliert werden,
   - daß die zerkleinerten oder granulierten Polymerabprodukte in eine förderfähige Konsistenz überführt werden,
   - daß die förderfähigen Polymerabprodukte mit überhitztem Dampf vermischt einem Wasserstoffplasmastrahl mit einer mittleren Massentemperatur von mindestens 1000 °C und einem Druck von 0,05 bis 0,5 MPa zugeführt und in diesem verteilt werden,
   - daß die Verweilzeit der Polymerabprodukte im Plasma entsprechend ihrer chemischen Zusammensetzung und dem physikalichen Zustand der dem Plasmastrahl zugeführten Polymerabprodukte, z. B. Teilchengröße, gewählt wird, vorzugsweise jedoch im Bereich von $10^{-3}$ s bis 30 s liegt,
   - daß der Plasmastrahl nach Ablauf der Reaktion auf Temperaturen unterhalb von 1000 °C gequencht und in einen Plasmapyrolysegasstrom umgewandelt wird und
   - daß die im Plasmapyrolysegasstrom vorhandenen Feststoffe, wie verkokte Polymerabprodukte oder Ruß, aus dem Plasmapyrolysegas entfernt und das Plasmapyrolysegas ganz oder teilweise in seine Konstituenten aufgetrennt wird.

5. Verfahren nach Anspruch 4, dadurch gekennzeichnet, daß die zerkleinerten oder granulierten Polymerabprodukte thermisch, vorzugsweise mittels eines Extruders, aufgeschmolzen und dadurch in eine förderfähige Konsistenz überführt werden.

6. Verfahren nach Anspruch 4, dadurch gekennzeichnet, daß die zerkleinerten und granulierten Polymerabprodukte durch Vermischen mit einem Lösungemittel oder einem Lösungsmittelgemisch in eine förderfähige Konsistenz überführt werden.

7. Verfahren nach Anspruch 4, dadurch gekennzeichnet, daß die zerkleinerten und granulierten Polymerabprodukte durch Vermischen mit Wasser in eine förderfähige Konsistenz überführt werden.

8. Verfahren nach Anspruch 4, dadurch gekennzeichnet, daß die zerkleinerten bzw. granulierten Polymerabprodukte mittels Heißdampf, Wasserstoff, Methan, $CO_2$ oder Heizgas als Schleppgas in den Plasmareaktor gefördert werden.

6

**9.** Verfahren nach Anspruch 4, <u>dadurch gekennzeichnet</u>, daß die vollständige oder teilweise Auftrennung des Plasmapyrolysegases in seine Konstituenten durch Absorption und Tieftemperaturdestillation erfolgt.

**10.** Verfahren nach den Ansprüchen 4 und 9, <u>dadurch gekennzeichnet</u>, daß nach der vollständigen oder teilweisen Auftrennung des Pyrolysegases in seine Konstituenten diese ganz oder teilweise wiederum entsprechenden Polymersyntheseprozessen zugeführt werden.

**Claims**

**1.** A process of complete utilisation of high-polymer waste products or mixtures of waste products having any chemical composition, characterised in that the polymer waste products are converted by plasma chemical processes into the chemical raw materials from which they were originally synthesised.

**2.** A process according to claim 1, characterised in that the polymer waste products are subjected to plasma pyrolysis under reducing conditions.

**3.** A process according to claim 1, characterised in that the plasma waste products are subjected to plasma gasification under simultaneous reducing and oxidising plasma conditions.

**4.** A process according to claim 1, characterised in that in a first step the polymer waste products are comminuted or granulated,
the comminuted or granulated polymer waste products are converted into a consistency suitable for conveying,
the conveyable polymer waste products are mixed with superheated steam and supplied to and distributed in a hydrogen plasma jet having an average mass temperature of at least 1000°C and a pressure of 0.05 to 0.5 MPa,
the residence time of the polymer waste products in the plasma is chosen in accordance with their chemical composition and the physical state, e.g. particle size, of the polymer waste products supplied to the plasma jet, but is preferably in the range from $10^{-3}$ s to 30 s,
after the reaction the plasma jet is quenched to temperatures below 1000°C and converted into a stream of plasma pyrolysis gas, and
the solids, such as coked polymer waste products or soot, present in the stream of plasma pyrolysis gas are removed from the gas and the gas is partly or completely separated into its constituents.

**5.** A process according to claim 4, characterised in that the comminuted or granulated polymer waste products are thermally melted, e.g. by using an extruder, and thus converted into a conveyable consistency.

**6.** A process according to claim 4, characterised in that the comminuted, granulated polymer waste products are converted into a conveyable consistency by mixing with a solvent or a solvent mixture.

**7.** A process according to claim 4, characterised in that the comminuted, granulated polymer waste products are converted into a conveyable consistency by mixing with water.

**8.** A process according to claim 4, characterised in that the comminuted or granulated polymer waste products are conveyed into the plasma reactor by being entrained by superheated steam, hydrogen, methane, $CO_2$ or heating gas.

**9.** A process according to claim 4, characterised in that the plasma pyrolysis gas is partly or completely separated into its constituents by absorption and low-temperature distillation.

**10.** A process according to claims 4 and 9, characterised in that after partial or complete separation of the pyrolysis gas into its constituents, the gas is partly or completely returned to suitable polymer synthesis processes.

**Revendications**

**1.** Procédé de valorisation complète des produits ou mélanges de produits de dégradation de hauts polymères de composition chimique quelconque, caractérisé en ce que les produits de dégradation de polymères sont transformés par voie chimioplasmatique en les corps de base chimiques à partir desquels ils ont été synthétisés à l'origine.

2. Procédé selon la revendication 1, caractérisé en ce que les produits de dégradation de polymères sont soumis à une pyrolyse plasmatique dans des conditions réductrices.

3. Procédé selon la revendication 1, caractérisé en ce que les produits de dégradation de polymère sont soumis à une gazéification plasmatique avec présence simultanée de conditions plasmatiques réductrices et oxydantes.

4. Procédé selon la revendication 1, caractérisé
   - en ce que les produits de dégradation de polymère sont pulvérisés ou granulés dans une première étape du procédé,
   - en ce que les produits de dégradation de polymère pulvérisés ou granulés sont transformés en une consistance favorisant la transformation,
   - en ce que les produits de dégradation de polymère aptes à la transformation sont mélangés avec de la vapeur surchauffée d'un courant plasmatique d'hydrogène ayant une température massique moyenne d'au moins 1000°C et une pression de 0,05 à 0,5 MPa et y sont répartis,
   - en ce que le temps de séjour de produits de dégradation de polymère dans le plasma se situe à une valeur correspondant à leur composition chimique et aux conditions chimiques des produits de dégradation de polymère ajoutés au courant plasmatique, par exemple la taille particulaire, mais se situe de préférence dans un intervalle allant de $10^{-3}$ secondes à 30 secondes,
   - en ce que le courant plasmatique après la fin de la réaction est éteint à des températures inférieures à 1000°C et est transformé en un courant de gaz de pyrolyse plasmatique, et
   - en ce que les produits solides présents dans le courant de gaz de pyrolyse plasmatique, comme les produits de dégradation de polymères cokéifiés ou le noir de fumée, sont retirés du gaz de pyrolyse plasmatique, et en ce que le gaz de pyrolyse plasmatique est entièrement ou partiellement séparé en ses constituants.

5. Procédé selon la revendication 4, caractérisé en ce que les produits de dégradation de polymère pulvérisés ou granulés sont thermiquement fondus, par exemple au moyen d'une extrudeuse, et sont ainsi transformés en une consistance apte à la transformation.

6. Procédé selon la revendication 4, caractérisé en ce que les produits de dégradation de polymère pulvérisés et granulés sont transformés par mélange avec un solvant ou un mélange de solvant en une consistance apte à la transformation.

7. Procédé selon la revendication 4, caractérisé en ce que les produits de dégradation de polymère pulvérisés et granulés sont transformés par mélange avec de l'eau en une consistance après la transformation.

8. Procédé selon la revendication 4, caractérisé en ce que les produits de dégradation de polymère pulvérisés ou granulés sont transportés au moyen de vapeur chaude d'hydrogène, de méthane, de $CO_2$ ou d'un gaz chauffant comme gaz vecteur dans le réacteur plasmatique.

9. Procédé selon la revendication 4, caractérisé en ce que la séparation complète ou partielle du gaz de pyrolyse plasmatique en ses constituants s'effectue par absorption et distillation à basse température.

10. Procédé selon les revendications 4 et 9, caractérisé en ce qu'après la séparation entière ou partielle du gaz de pyrolyse en ses constituants, ceux-ci sont à nouveau introduits dans les procédés de synthèse polymérique correspondants.